# EUROPEAN PATENT SPECIFICATION

(11) **EP 1 402 556 B1**
(45) Date of publication and mention of the grant of the patent: **22.09.2004**
(21) Application number: 03709849.8
(22) Date of filing: 19.03.2003
(51) Int. Cl.: H01J 9/50, B23K 26/40

(54) **METHOD FOR DISMANTLING ELECTRONIC PRODUCTS CONTAINING CATHODE-RAY TUBES AND FOR RECYCLING THE MATERIALS**
VERFAHREN ZUM DEMONTIEREN ELEKTRONISCHER PRODUKTE, DIE KATHODENSTRAHLRÖHREN ENTHALTEN, UND ZUM WIEDERVERWENDEN DER MATERIALIEN
PROCEDE DE DESASSEMBLAGE DE PRODUITS ELECTRONIQUES CONTENANT DES TUBES CATHODIQUES ET DE RECYCLAGE DES MATERIAUX

(30) Priority: 22.03.2002 FI 20020554
(43) Date of publication of application: 31.03.2004
(73) Proprietor: Proventia Automation Oy, 90401 Oulu (FI)
(72) Inventor: HOLAPPA, Rauno, FIN-90460 Oulunsalo (FI); LITENDAHL, Heikki, FIN-90860 Halosenniemi (FI); LESKINEN, Kalevi, FIN-90240 Oulu (FI)
(74) Representative: Laitinen, Pauli Sakari
(86) International application number: PCT/FI2003/000211
(87) International publication number: WO 2003/081626

(56) References cited:
- DE-A1- 4 205 404
- DE-A1- 10 027 989
- PATENT ABSTRACTS OF JAPAN vol. 1999, no. 8 30 June 1999 & JP 11 086 734 A (MATSUSHITA ELECTRIC IND CO LTD) 30 March 1999

## Description

The present invention relates to a method for recycling cathode-ray tubes and particularly for processing them after they have been taken out of use, in such a way that the raw materials are fully recovered.

Very large numbers of cathode-ray tubes (CRTs) are used in both televisions and in computer displays. These are obviously replaced at a certain rate and it has been estimated that, on a European scale, 150 000 tonnes of CRTs are scrapped annually, the number even in Finland being 2000 tonnes annually, corresponding to approximately 250 000 CRTs.

When CRTs are scrapped, an attempt is made to recover all the usable materials. In addition, an attempt is made to ensure that the recovered materials are as clean as possible, which naturally makes their further usability and value as great as possible.

Instead of crushing CRTs, other methods too, which aim to give a better end result, are used in scrapping is aimed at. Examples of these are disclosed in the German patent application 4205404 and patent publication 4234706. These disclose that a resistance wire is attached to the tube in the area between the front and the conical rear part, the wire is heated, so that it violently heats the tube under it, cracking it and permitting it to be divided into two parts along the crack.

German application 3901842 in turn discloses the use of a high-pressure water jet for cutting the tube into parts.

Further, the German publications 3901842 and 4003497 disclose the use of a mechanical, water-cooled cutting blade for cutting tubes into parts. The latter publication also discloses that the CRT can be simply crushed.

In addition, several methods are known, in which the lead soldering between the conical portion and the front part of the CRT is heated with a laser ray, allowing the part to be separated from each other.

Each of documents JP-A-11-086734 and DE-A-10027989 discloses caser-machining of a CRT to seperate parts thereof.

In crushing, it is impossible to recover ciean material, in addition, methods that use water for cutting or cooling have the drawback of creating an excess of water, which mixes with the cutting powder and creates a mess. In any case, the water must be removed to allow further processing.

The glass of the front of the CRT must not contain any lead, if it is to be able to be recycled for certain purposes. If the front is completely clean when it is recovered, it will naturally be very much more valuable than mixed waste. The aforementioned separation methods based on laser rays have the drawback that the said joint includes lead or is formed by lead, so that when the said methods are used the result is glass of very little value.

The conical portion of a CRT and its protruding rear part are of lead glass, which is used to keep the electromagnetic radiation entirely inside the tube. The front part, on the other hand, is of conventional glass. Colours require the use of coatings that luminesce in electron radiation, thus creating the colours. In addition, a CRT has both inside and outside various metal components, such as deflector coils, grids, and similar.

The Japanese company Matsuhita has developed a robotized system, which can dismantle televisions at a rate of about 50 seconds/device. The method is disclosed in US patent 6,186,848. The most important features of the said patent are: the device to be dismantled is placed on a conveyor, which takes it to a sloping table where the protective case of the rear part of the device is removed, a powerful air jet is then used to clean the mechanism and a U-shaped opening is cut in the side panel. Through this, the steel band protecting the joint between the front and the conical portion of the CRT is then heated inductively and pushed off mechanically.

After this, the base of the metal band and the glue on it are brushed away and the components of the CRT are cut off mechanically using a diamond disc and heated so that the thermal tension detaches the components from each other. The other components are graded, crushed, and recycled to provide parts that are as clean as possible.

The said method requires the work of five people and six robots and naturally also conveyors. The method described above uses separate sensors, of which there are several, to measure sizes and distances.

The present invention is intended to achieve a method, the use of which avoids the drawbacks according to the prior art. The intention is also to create an automatic method that will recover the recyclable material in a clean form.

The aforesaid and other benefits and advantages of the invention are achieved in the manner described as characteristic in the accompanying Claims.

In the following, the invention is examined, without in any way restricting it, with reference to the accompanying schematic drawings, which show various specific features of the invention.

Thus:
Figure 1 shows a practicable general arrangement of a working environment for applying the procedure according to the invention;
Figure 2 shows one well-regarded procedure for detaching the front panel of a display terminal or television device containing a cathode-ray tube;
Figure 3a shows how a groove is machined in a CRT with a laser, for splitting;
Figure 3b shows in turn one procedure, by means of which the tube is easily split along the groove.

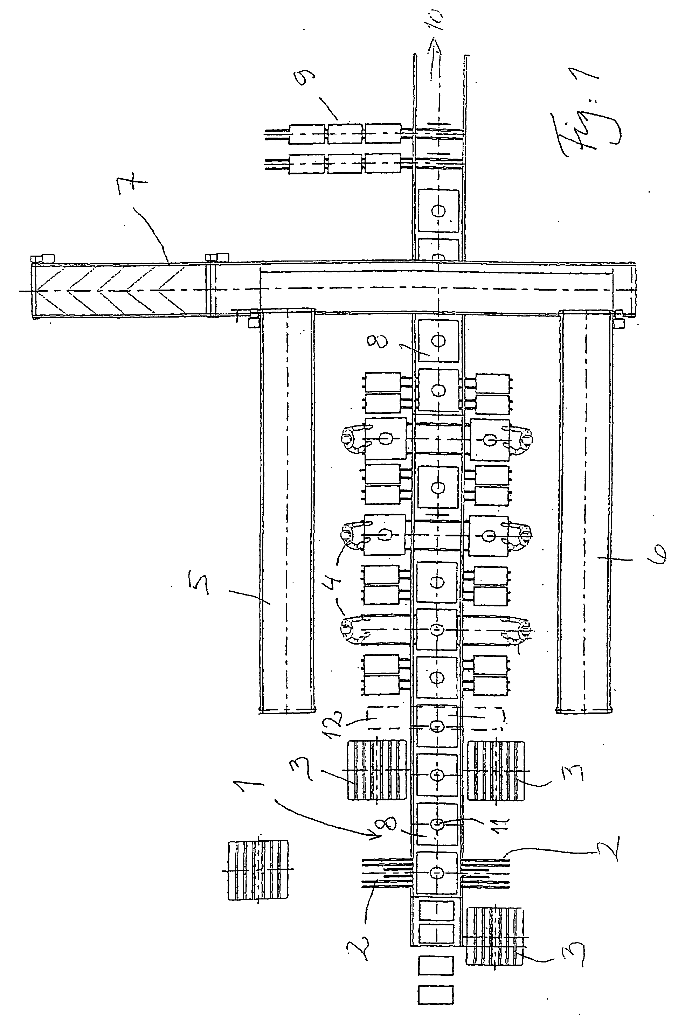

Figure 1 thus shows schematically an example of a workplace, in which, for example, televisions or display terminals are dismantled. Thus, the actual conveyor line, along which the televisions or similar to be dismantled travel, is marked in the figure with the arrow 1. The devices to be dismantled arrive at this line from the side aiong the schematic conveyor 2. The number 3 refers to conveyors, on which boxes travel, into which the dismantlers 4 collect the suitably sorted detached components. After detaching, the cases are lifted back onto the conveyors 5 and 6, from which they transfer to the transverse conveyor 7 to be taken to crushing and other further processing.

The boxes filled with detached components are transferred to further processing on the transverse conveyor 9. The CRTs without their cases are transferred to further processing in the direction of the arrow 10. The devices to be dismantled are marked in Figure 1 with the reference number 8.

The following is a brief description of one example of a process according to the invention. A television and a CRT computer display terminal is generally assembled with screws, so that the frame and rear part of the tube are screwed together at four points to create an entity comprising the casing and shell of the device. According to the method now developed, the device containing the CRT is taken from the conveyor, attached by its CRT with a suction pad, which is not shown in detail in Figure 1, but which is shown by the circle 11 in the centre of the device 8, the rear casing is removed, as described later, the front casing is removed downwards, so that the CRT with all its electronic devices remains attached to the suction pad holder. The suction pad holder should have a sufficiently large diameter to give a sufficient retention moment to allow, among other things, the deflector coils to be twisted off the thin neck of the tube.

In the method now developed, the said screws can be sought inductively. This station is shown in Figure 1 by broken lines as a block 12. If an induction heating coil with a sufficiently high frequency is moved near the television or CRT, the coil begins to take more current when a ferro-metallic component is nearby. The said detector is thus guided by a technique that is, as such, known, even closer to the ferro-metallic component and heats it, for example, in the station 12, thus melting the plastic component surrounding it. If all the, for example, four attachment screws are heated simultaneously, the components that the screws hold together can be lifted apart from each other, so that the rear and front panel of the casing are separated. This work stage is performed by the dismantlers 4 immediately after the heating, when they simply lift the rear part of the casing detached from the device onto the conveyors 5 and 6.

The other small parts that are detached from the revealed mechanism are sorted in to boxes, which are underneath the belt. Once the box is full, the dismantler presses a button and the box leaves for emptying 9 and is automatically replaced by a new empty box.

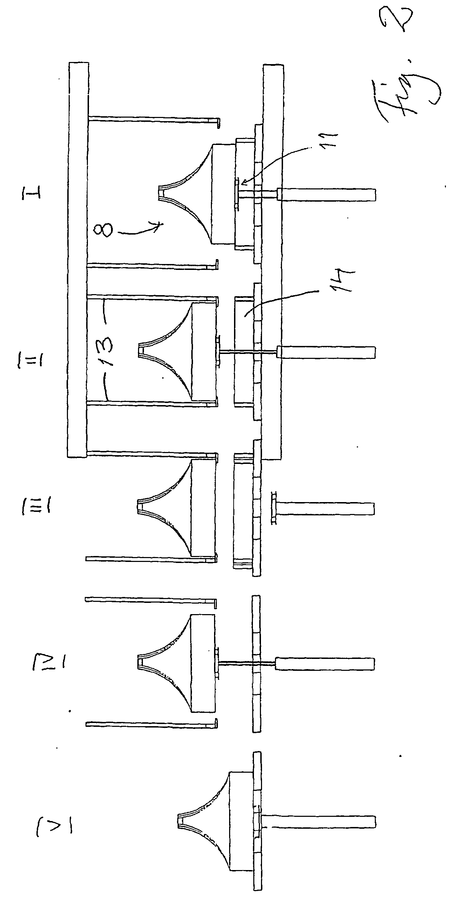

After this, it is also wished to dispose of the front part of the casing, which is usually a plastic component too. For this purpose, the series of stages shown in Figure 2 can be carried out at the dismantler's workstation. At the right-hand side of Figure 2 is the situation in which the device, which is attached to a suction pad 11 and has its rear part removed, in on the work table. First, the suction pad device 11 is used to lift the device to the upper position, stage II, in which grip means 13 grip it and hold it raised. The front part 14 of the casing remains on the table. In stage III, the suction pad device releases its grip on the CRT and the arm of the suction pad device drops beneath the work surface. In this stage, the front part 14 of the casing can be simply pushed aside onto the conveyors 5 and 6 of Figure 1.

Stages IV and V show how the CRT, from which the casing has now been removed, is lowered from the support of the grip means 13. The CRT travels on to the next stages. From now on, the CRT by itself is marked with the reference number 15.

The next stage is the removal of the metal band that protects the joint between the front and rear parts of the CRT and to which other auxiliary devices may also be attached. If desired, the location of the band can also be sought inductively, in which case the heated and stretched band is easy to remove. The removal can be done manually or automatically using a robot-like device.

The work stages continue with the cleaning of the rest of the CRT, which is already cleaned of its casing and band. Under the band there is generally a layer of glue, which, according to one embodiment of this invention, is removed with a laser device that provides a 2 - 3-cm wide fan-shaped light beam, which bums the giue layer into a state in which it can be removed with a brush or a blast of air. Next, the same or a similar laser device uses an inductive detector or a photo-optical reflection sensor to seek for various adhesive labels, which are removed by a fan laser in the same way as above.

At this stage, the outside of the CRT 15 is clean and the different glass grades of the front and conical part of the CRT can be separated in the next stage.

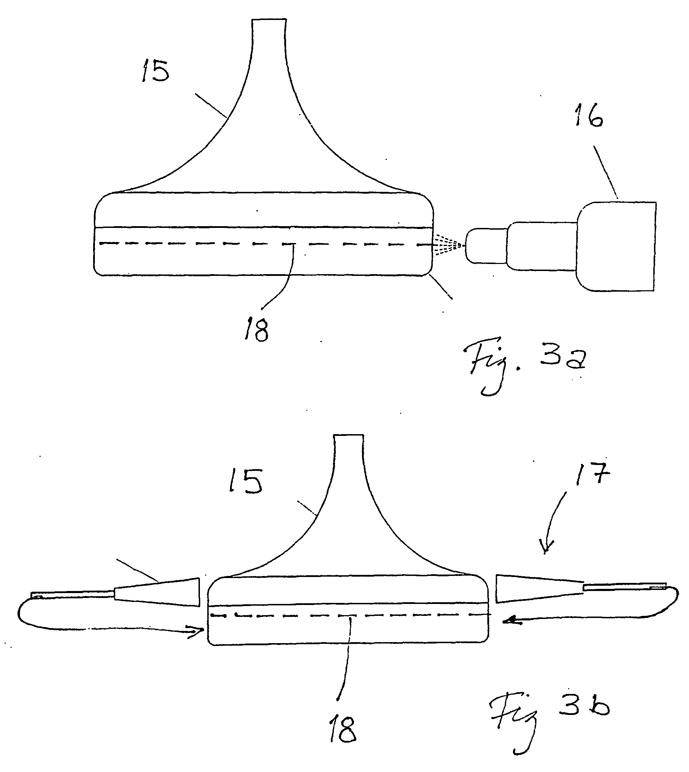

Thus after this a laser device, which is in this case a point laser 16, shown in Figure 3a, travels around the CRT, heating and removing material from the CRT, thus forming a small groove 18 around it. In practice, the laser device 16 is usually stationary while the CRT 15 rotates.

If suitable parameters are selected, the CRT will split naturally, without any further measures. Thus, in practical tests it has been observed that by using a laser beam with an output of 1200 W or more, for example 1500 W, and a speed at which the beam moves around the CRT during this stage of less than 3 m per minute, the CRT will split automatically, without the possible heating/cooling measures described later. Particularly the direction or other parameters of the laser beam can be adjusted to create a specific temperature gradient on the different sides of the groove, thus ensuring splitting.

Figure 3b shows how the CRT 15 is divided into two parts along this groove 18, if it is wished to assist the splitting or if it must be assisted. This takes place by creating a large temperate difference on either side of the groove 18, which will split the CRT 15 along the groove 18. Thus, after the laser treatment described above, usually immediately after it, compressed air is blown through a vortex pipe, that is as such known, on the different sides of the groove formed by the laser. According to a known principle, the compressed aid fed into the vortex pipe 17 divides into two air flows, with one end emitting hot air and the other cold air. This is a simple way of creating a temperature difference on the different sides of the groove 18 formed by the laser. This temperature difference is usually enough to split the CRT along the said groove. Sufficiently rapid cooling/heating can be created by using several vortex pipes.

Compressed air blown through the vortex pipe 17 at a pressure of 7 bar will already create a temperature difference of more than 100°C while a greater pressure will give a temperature difference of as much as 170°C.

It is obvious that the temperature difference can be created in many other ways too. Thus it is possible to use conventional cold or hot air jets, or even a separate laser device to create the temperature difference.

Once the CRT 15 has been divided into two parts and its metal components removed in ways that are, as such, known, manually or using a robot, the fluorescent powder is brushed and sucked off with an air flow from inside the CRT and then after this the aluminium oxide layer is brushed off the sides with a power brush. In the method now being described, the aluminium oxide adheres to the said brush as abrasive particles, so foreign substances are mixed with the system as little as possible.

After this, the other detached metal components are separated with the aid of inductive heating and a thermal detector based on infrared radiation. Using a combination of these, the various metallic substances; ferromagnetic substances, and different heating and parts of aluminium and copper can be automatically sorted separately onto the belt.

The method differs significantly from the methods described previously. In this case, a laser is used, according to one embodiment, for two different purposes; for removing material from a fixed point (the groove 18) and, if desired, also for removing material (adhesive labels and similar) from a base without damaging it. If inductive heating is used, it can be used both to reveal a metal and to melt plastic from around metallic attachments, and also for detaching the band of the CRT and, together with an infrared thermometer, for sorting metals.

The conical part of the CRT 15 generally includes a graphite and/or metal-oxide coating, which is used to prevent the electron beam from escaping. One well proven way of removing this coating and cleaning the glass is to immerse the conical part of the CRT in a vibrating grinding machine for the removal. According to the invention partly fluorescing crushed glass is used for cleaning, a 0,5 - 2,0-mm crushed fraction made form part of the same CRT being used as the crushed material. The crushed glass together with the graphite, ground off label residues, and metal oxides are led to separation, for example, to a cyclone separator and bag filter, and are then returned to the vibrating grinding machine. Instead of a fluidizing vibrating grinding machine, blasting with the same crushed glass can naturally also be used.

Working on CRTs with lasers involves special problems that do not arise in normal glass cutting. The problems are the porosity of the joint between the panel glass and the conical glass, the asymmetrical shape of the periphery, variations in the thickness of the glass and in the glass grades, and other impurities in the joint. Thus, extensive tests have shown that the glass should be grooved with a laser mainly 8 - 15 mm from the joint, on the panel glass (the tube front) sides to ensure the cleanness of the front glass and that this is preferably heated with the laser in the de-focus position, so that the temperature difference is over 120°C and that after this it is cooled symmetrically with a vortex pipe travelling on at least two sides. According to the tests made, the preferable laser output is 900 - 800 W and the preferable speed about 3,5 m/min.

According to the present invention, the inductive heater is also used under robot control to reveal the heated screws, which are heated so much that the plastic melts around them and the screwed joint can be pulled apart using a reasonable amount of force.

Using this procedure, human work power can be minimized, the number of various sensors can be reduced, and the same devices can be used for different tasks. According to the invention, dismantling can take place either entirely using a human workforce, or be fully or partly automated.

An essential part of the invention is the fact that the devices used are essentially only a laser device, with two different functions, and inductive heaters, as well as an infrared camera and a sorting robot that it guides, as well as preferably, as an important sub-factor a "vibrating grinding machine", in which fluidizing crushed glass is used to clean the conical part of the CRT, or else the same cleaning can be performed using crushed glass blasted with an air flow.

In this way, the plastic components are separated, the glasses are sorted into two classes, and the metals; iron, aluminium, and copper, and the circuit boards are sorted into different classes. After this, these are processed using normal crushing and sorting methods, which are, as such, known from scrap processing.

## Claims

1. A method for dismantling electronic devices equipped with a cathode-ray tube (15) and for recycling the materials, which includes stages, in which the casing of the device is removed, the detachable auxiliary device components are stripped from the tube, and the materials are cleaned and sorted, **characterized in that** a point laser (16) is used to form a groove (18) at a splitting point, which is situated towards the front part, at a distance from the joint between the front part and the conical part, and to cause a temperature difference on the different sides of the said groove (18), in order to ensure the splitting of the parts, and the clean components thus separated from each other are used for further purposes.

2. A method according to Claim 1, **characterized in that** the laser source is also used to remove impurities, such as glue, labels, and similar from the outer surface of the tube.

3. A method according to Claim 2, **characterized in that** a so-called fan laser or the de-focus setting of the laser is used to remove the impurities.

4. A method according to Claim 1, **characterized in that** an inductive heating device is used to both search for metallic elements and to heat them.

5. A method according to Claim 1, **characterized in that** a laser beam, with an output of more than 1200 W and the speed of movement of the beam over the tube is less than 3 m per minute, is used to make the splitting groove.

6. A method according to Claim 3, **characterized in that** the fan, or de-focus laser is also used to heat the tube, after the splitting groove has been made, especially in the immediate vicinity of the groove, in the area of one side of the groove.

7. A method according to Claim 4, **characterized in that** the same inductive heating element is used automatically to search for and heat the said metal components requiring to be heated.

8. A method according to Claim 1, **characterized in that** the split parts of the tube are then cleaned, using, as the grinding material, the material that is obtained by crushing parts of a tube that is similar to the tube to be cleaned.

9. A method according to Claim 4, **characterized in that** a frequency of 400 - 1000 kHz is used in the inductive heating device, when searching for and heating screws, and 200 - 600 kHz when heating the band of the tube.

10. A method according to Claim 1, **characterized in that** the temperature difference is created on the different sides of the groove by using one or several vortex pipes (17), the hot air jet of which is directed to one side of the groove and the cold air jet to the other side.

11. A method according to Claim 1, **characterized in that** a temperature difference of at least about 120°C is created on the different sides of the groove.

12. A method according to any of the above Claims, **characterized in that** inductive heating at a standard output and the measurement of the temperature of the parts using a device based on infrared light are used to sort the parts, particularly the metal parts, obtained from the dismantling of the cathode-ray tube.

## Patentansprüche

1. Verfahren für die Zerlegung von elektronischen Geräten, die mit einer Kathodenstrahlröhre (15) ausgestattet sind, und fürs Recycling der Materialien, bestehend aus Schritten, wo das Gehäuse der Vorrichtung entfernt wird, die abnehmbaren Komponenten der Hilfsgeräte von der Röhre entfernt werden und die Materialien gereinigt und sortiert werden, **dadurch gekennzeichnet, dass** ein Punktlaser (16) eingesetzt wird, um eine Rille (18) an einer Trennstelle zu bilden, die mit Abstand zur Verbindungsstelle zwischen dem vorderen Teil und dem konischen Teil zum vorderen Teil hin platziert ist, und um eine Temperaturdifferenz auf den verschiedenen Seiten der Rille (18) zu verursachen, um die Abtrennung der Teile sicherzustellen, und die dadurch voneinander getrennten sauberen Komponenten werden für weitere Zwecke benutzt.

2. Verfahren nach Anspruch 1, **dadurch gekennzeichnet, dass** die Laserquelle auch zur Entfernung von Verunreinigungen, wie Klebstoff, Etiketten, und ähnlichem von der Außenfläche der Röhre benutzt wird.

3. Verfahren nach Anspruch 2, **dadurch gekennzeichnet, dass** ein so genannter Fächerlaser oder die Defokus-Einstellung des Lasers zur Entfernung der Verunreinigungen benutzt wird.

4. Verfahren nach Anspruch 1, **dadurch gekennzeichnet, dass** ein induktives Heizgerät sowohl für die Suche nach Metallelementen und auch zur Erhitzung derselben eingesetzt wird.

5. Verfahren nach Anspruch ist 1, **dadurch gekennzeichnet, dass** ein Laserstrahl mit einer Leistung von mehr als 1200 W und einer Bewegungsgeschwindigkeit des Strahls über die Röhre unter 3 m pro Minute eingesetzt wird, um die Trennrille auszuführen.

6. Verfahren nach Anspruch 3, **dadurch gekennzeichnet, dass** der Fächeroder Defokus-Laser auch zur Erhitzung der Röhre benutzt wird, nachdem die Trennrille ausgeführt worden ist, besonders in der unmittelbaren Nähe der Rille, im Bereich einer Seite der Rille.

7. Verfahren nach Anspruch 4, **dadurch gekennzeichnet, dass** das gleiche induktive Heizelement automatisch dazu eingesetzt wird, um nach den Metallkomponenten zu suchen und um diejenigen Metallkomponenten zu erhitzen, die erhitzt werden müssen.

8. Verfahren nach Anspruch 1, **dadurch gekennzeichnet, dass** die abgetrennten Teile der Röhre dann gereinigt werden, wobei als Schleifmaterial das durch Zerkleinerung von Teilen einer Röhre erhaltene Material verwendet wird, das der zu reinigenden Röhre ähnlich ist.

9. Verfahren nach Anspruch 4, **dadurch gekennzeichnet, dass** beim induktiven Heizgerät eine Frequenz von 400-1000 kHz benutzt wird, wenn Schrauben gesucht und erhitzt werden, und 200-600 kHz, wenn das Band der Röhre erhitzt wird.

10. Verfahren nach Anspruch 1, **dadurch gekennzeichnet, dass** die Temperaturdifferenz auf den verschiedenen Seiten der Rille erzeugt wird indem ein oder mehrere Wirbelrohre (17) benutzt werden, deren Heißluftstrahl zu einer Seite der Rille und der Kaltluftstrahl zur anderen Seite gerichtet ist.

11. Verfahren nach Anspruch 1, **dadurch gekennzeichnet, dass** eine Temperaturdifferenz von zumindest ungefähr 120° auf den verschiedenen Seiten der Rille erzeugt wird.

12. Verfahren nach einem der vorhergehenden Patentansprüche, **dadurch gekennzeichnet, dass** induktives Erhitzen bei einer Standardleistung und die Temperaturmessung der Teile mit Hilfe einer auf Infrarotlicht beruhenden Vorrichtung eingesetzt werden, um die Teile, insbesondere die Metallteile zu sortieren, die bei der Zerlegung der Kathodenstrahlröhre angefallen sind.

## Revendications

1. Procédé pour démonter des appareils électroniques équipés de tubes à rayons cathodiques et pour recycler les matériaux, incluant des stades dans lesquelles on enlève le boîtier de l'appareil, on démonte du tube les composants auxiliaires démontables de l'appareil, et les matériaux sont nettoyés et triés, **caractérisée en ce qu'**un faisceau laser à point est utilisé pour former une rainure dans un point de fission, qui est situé vers la partie frontale, à une distance de la jointure entre la partie frontale et la partie conique, et pour créer une différence de température sur les différents côtés de ladite rainure dans le but de réaliser la fission des parties, et les composants propres ainsi séparés les uns des autres sont utilisés à d'autres fins.

2. Procédé selon la revendication 1, **caractérisé en ce que** la source de laser est utilisée également pour enlever des impuretés telles que la colle, les étiquettes et similaires de la surface extérieure du tube.

3. Procédé selon la revendication 2, **caractérisé en ce que** ce qui convenu d'appeler un faisceau laser défocalisé ou le dispositif de défocalisation du laser est utilisé pour enlever les impuretés.

4. Procédé selon la revendication 1, **caractérisé en ce qu'**un appareil de chauffage à induction est utilisé pour trouver les éléments métalliques et pour les chauffer.

5. Procédé selon la revendication 1, **caractérisé en ce qu'**un faisceau laser, d'une puissance de plus de 1200 W et la vitesse de mouvement du faisceau au dessus du tube étant moins de 3 m par minute, est utilisé pour réaliser la rainure de fission.

6. Procédé selon la revendication 3, **caractérisé en ce que** le faisceau ou laser défocalisé est utilisé également pour chauffer le tube, lorsque la rainure de fission a été faite, particulièrement dans la proximité immédiate de la rainure, dans la zone sur l'un des côtés de la rainure.

7. Procédé selon la revendication 4, **caractérisé en ce que** le même élément chauffant à induction est utilisé automatiquement pour trouver et chauffer lesdits composants métalliques nécessitant à être chauffés.

8. Procédé selon la revendication 1, **caractérisé en ce que** les pièces séparées du tube sont ensuite nettoyées, en utilisant en tant que matériau abrasif le matériau obtenu en écrasant des pièces d'un tube similaire au tube devant être nettoyé.

9. Procédé selon la revendication 4, **caractérisé en ce qu'**une fréquence de 400 à 1000 kHz est utilisée dans le dispositif de chauffage à induction, lorsque l'on cherche et chauffe des vis, et une fréquence de 200 à 600 kHz lorsque l'on chauffe la bande du tube.

10. Procédé selon la revendication 1, **caractérisé en ce que** la différence de température est créée sur les différents côtés de la rainure en utilisant un ou plusieurs tuyaux à tourbillons, le jet d'air chaud duquel ou desquels est dirigé sur un côté de la rainure et le jet d'air froid sur l'autre côté.

11. Procédé selon la revendication 1, **caractérisé en ce qu'**une différence de température d'environ 120 °C au moins est créée sur les différents côtés de la rainure.

12. Procédé selon l'une des revendications précédentes, **caractérisé en ce qu'**un chauffage à induction d'un rendement standard et le mesurage de la température des pièces utilisant un dispositif basé sur une lumière infrarouge, sont utilisés pour trier les pièces, et particulièrement les pièces métalliques, obtenues suite au démontage du tube à rayons cathodiques.
